# EUROPÄISCHE PATENTANMELDUNG

(11) **EP 4 332 701 A1**
(43) Veröffentlichungstag der Anmeldung: **06.03.2024**
(21) Anmeldenummer: 22192867.4
(22) Anmeldetag: 30.08.2022
(51) Int. Cl.: G05B 19/406

(54) **SYSTEME UND VERFAHREN ZUR UNTERSTÜTZUNG EINES BEARBEITUNGSPROZESSES**

(71) Anmelder: Siemens Aktiengesellschaft, 80333 München (DE)
(72) Erfinder: Eckstein, Oliver, 90768 Fürth (DE); Siegel, Philipp, 08064 Zwickau (DE); Vieweg, André, 09112 Chemnitz (DE)
(74) Vertreter: Siemens Patent Attorneys

(57) **Zusammenfassung**

System zur automatisierten Unterstützung einer Inspektion und/oder Überwachung eines Bearbeitungsprozess umfassend einen Speicher (2) zum Speichern von maschinenausführbaren Komponenten und einen Prozessor (3), der operativ mit dem Speicher (2) gekoppelt ist und dazu konfiguriert ist, die maschinenausführbaren Komponenten auszuführen, wobei die maschinenausführbaren Komponenten eine Werkzeugbahnanalyse-Komponente (20, 200) umfassen, wobei die Werkzeugbahnanalyse-Komponente (20, 200) dazu konfiguriert ist, aus Prozessdaten (PD), wobei die Prozessdaten (PD) für einen Bearbeitungsprozess repräsentativ sind, welcher von einer zumindest eine Achse zum Bewegen eines Werkzeugs (101) und eine Steuereinrichtung (102) zum Steuern der zumindest einen Achse aufweisenden Werkzeugmaschine (100) ausgeführt wird, Signale (Sx, Sy, Sz) zur Visualisierung einer Bahn des Werkzeugs - einer Werkzeugbahn (WB1, WB2) - zu generieren, und zumindest eine Größe zu ermitteln, welche eine Achsenbewegung der zumindest einen Achse charakterisiert, zu prüfen, ob die ermittelte Größe zumindest einen, der zumindest einen Größe zugewiesenen Grenzwert (GW) erreicht oder überschreitet, beim Erreichen oder Überschreiten des Grenzwerts (GW) zumindest ein Zusatzsignal (ZS) zur Kennzeichnung zumindest eines Bereichs (BG) der Werkzeugbahn (WB1, WB2), an dem der Grenzwert überschritten ist, zu generieren.

## Beschreibung

Die vorliegende Offenbarung betrifft ein System zur automatisierten Unterstützung einer Inspektion und/oder Überwachung eines mittels einer Werkzeugmaschine ausgeführten Prozesses umfassend einen Speicher zum Speichern von maschinenausführbaren Komponenten und einen Prozessor, der operativ mit dem Speicher gekoppelt ist und dazu konfiguriert ist, die maschinenausführbaren Komponenten auszuführen, wobei die maschinenausführbaren Komponenten eine Werkzeugbahnanalyse-Komponente umfassen, wobei die Werkzeugbahnanalyse-Komponente dazu konfiguriert ist, aus Prozessdaten, wobei die Prozessdaten für einen Prozess repräsentativ sind, welcher von einer zumindest eine Achse zum Bewegen eines Werkzeugs und eine Steuereinrichtung zum Steuern der zumindest einen Achse aufweisenden Werkzeugmaschine ausgeführt wird, um beispielsweise ein Werkstück zu bearbeiten oder zu fertigen, Signale zur Visualisierung einer Bahn des Werkzeugs - einer Werkzeugbahn - zu generieren, und zumindest eine Größe zu ermitteln, welche eine Achsenbewegung der zumindest einen Achse charakterisiert.

Außerdem wird ein computergestütztes Verfahren zur automatisierten Unterstützung einer Inspektion und/oder Überwachung eines mittels einer Werkzeugmaschine ausgeführten Prozesses, wobei aus, insbesondere während des Betriebs, z.B. in Echtzeit, der Werkzeugmaschine erhaltenen Prozessdaten, wobei die Prozessdaten für einen Prozess repräsentativ sind, welcher von einer zumindest eine Achse zum Bewegen eines Werkzeugs und eine Steuereinrichtung zum Steuern der zumindest einen Achse aufweisenden Werkzeugmaschine ausgeführt wird, um ein Werkstück zu bearbeiten, Signale zur Visualisierung einer Bahn des Werkzeugs - einer Werkzeugbahn - generiert werden, und zumindest eine Größe, beispielsweise durch Ableiten, ermittelt wird, welche eine Achsenbewegung der zumindest einen Achse charakterisiert.

Darüber hinaus wird eine Steuereinrichtung, eine Werkzeugmaschine und ein Computerprogramm offenbart.

Bei mittels Werkzeugmaschinen und/oder Robotern ausgeführten Prozessen ist es wichtig, den Vorschub, also die Geschwindigkeit, mit der die Relativbewegung zwischen Werkzeug und Werkstück ausgeführt wird, zu überwachen.

Je nach Prozess beziehungsweise Art des Prozesses ist ein prozessoptimaler Vorschub erforderlich. Der Vorschub des Werkzeugs ist in der spanenden Fertigung in Teilprozessen wie z.B. Schlichten ein wichtiges Kriterium, um Werkstücke mit hoher Oberflächenqualität fertigen zu können.

Oft ist es wünschenswert, einen homogenen Vorschub, d.h. stetige Vorschubänderungen im Rahmen der verfügbaren Dynamik der Maschine sicherzustellen.

Ungewollte Geschwindigkeitseinbrüche führen zu Qualitätseinbüßen in der Oberflächenqualität, erhöhen der Verschleiß an Werkzeugen und Maschine, können zu einem Werkzeugbruch führen.

Kommt es beispielsweise zu einem (im Raum lokalen) Geschwindigkeitsabfall beziehungsweise -einbruch in der subtraktiven oder additiven Fertigung, kann sich dies später am fertigen Werkstück als Marke zeigen, weil beispielsweise am Ort des Geschwindigkeitseinbruchs mehr Material abgetragen oder hinzugefügt wurde als bei homogenem Vorschub. In Industrien mit hohen Anforderungen an die Oberflächenqualität führt dies oftmals zu Ausschuss.

Als Beispiel seien 5-Achsmaschinen und Maschinen mit nicht kartesischem Achsaufbau (z.B. Hexapoden) genannt. Für die Festlegung der Verfahrbewegungen sind zwei typische Varianten bekannt.

Der Anwender kann die Raumkontur entweder über Kreis oder Gerade beziehungsweise Polynomform programmieren, sodass der TCP (für engl. Tool-Center-Point) entsprechend dem programmierten Konturverlauf auf der Bahn geführt wird.

Alternativ kann der Anwender den Zielpunkt in Raum/Werkstücckoordinaten (WCS für engl. workpiece coordinate system) programmieren, die in Maschinenkoordinaten (MCS machine coordinate system) abgebildet werden. Der TCP bewegt sich entsprechend den maximal möglichen Geschwindigkeiten in den Achsen auf einer nicht einfach vorhersehbaren Kurve (PTP für engl. Point-to-Point). Bedingt durch den Wegfall der Bewegung des TCP entlang einer Raumkurve ist die PTP-Bewegung schneller als die TCP-Bahnbewegung ist. Die PTP-Bewegung ist schneller, weil sie direkt ist (der PTP-Weg ist der kürzeste). Die beteiligten Maschinenachsen fahren direkt ohne Berücksichtigung von Zwangsbedingungen aus einer angewählten Koordinatentransformation direkt auf die WCS-Zielposition.

Aus dem Stand der Technik sind Verfahren bekannt, bei welchen anhand der Prozessdaten, die beispielsweise während eines Fräsprozesses oder eines additiven Fertigungsprozesses aufgezeichnet worden sind, die Geschwindigkeit, die Beschleunigung oder der Ruck der Bewegung des TCP sichtbar gemacht werden kann. Dabei kann die TCP-Bahn beispielsweise mit der Vorschubgeschwindigkeit eingefärbt werden.

Mit anderen Worten kann aus Prozessdaten die Geschwindigkeit ermittelt und entlang der Werkzeugbahn entsprechend gekennzeichnet werden, indem die Werkzeugbahn beispielsweise entsprechend der ermittelten Geschwindigkeit eingefärbt wird.

Eine solche Einfärbung ist allerdings nicht ausreichend, wenn die (lokalen) Geschwindigkeitseinbrüche und ihre Ursache identifiziert werden sollen, um sie in Zukunft zu vermeiden. Dabei reicht oft nicht die Expertise von Mechatronik-Experten aus, die Prozessdaten an der Werkzeugmaschine aufzeichnen und mit eigenen Tools analysieren (z.B. Matlab). Ohnehin ist dieses Wissen bei den Anwendern / Bedienern der Werkzeugmaschine selten vorhanden.

Die Aufgabe, die der vorliegenden Offenbarung zugrunde liegt, ist, Systeme und Verfahren bereitzustellen, die ermöglichen, die Geschwindigkeitseinbrüche in Fertigungsprozessen einfacher zu identifizieren und auf ihre Ursache rückzuschließen.

Diese Aufgabe wird mit einem System der oben genannten Art erfindungsgemäß dadurch gelöst, dass die Werkzeugbahnanalyse-Komponente dazu konfiguriert ist, zu prüfen, ob die ermittelte Größe zumindest einen, der zumindest einen Größe zugewiesenen Grenzwert überschreitet, beim Überschreiten des Grenzwerts zumindest ein Zusatzsignal zur, vorzugsweise visuellen, Kennzeichnung zumindest eines Bereichs der Werkzeugbahn, an dem der Grenzwert überschritten ist, zu generieren.

Hierdurch wird eine Abweichung der zumindest einen Größe an einer bestimmten Position unmittelbar feststellbar und ablesbar.

Eine "unmittelbare Ablesbarkeit" kann beispielsweise dadurch erreicht werden, dass die Position in Farbe, beispielsweise als ein gefärbter Punkt, angezeigt wird und das Ausmaß der Abweichung gemäß einer Farbskala visualisiert wird.

Bediener können nun Maßnahmen ergreifen und den Prozess so verändern, dass die dynamikbegrenzende Wirkung aufgrund des Erreichens oder des Überschreitens des zumindest einen Grenzwerts reduziert oder beseitigt wird. Die Maßnahmen können eine oder mehrere Maßnahmen aus der Gruppe umfassen: NC-Teileprogrammänderung, Aufspannsituation im Arbeitsraum der Maschine verändern, Werkzeuglängen und gegebenenfalls Werkzeugorientierungen ändern.

Die Prozessdaten enthalten beispielsweise von an und/oder in der Werkzeugmaschine angebrachten bzw. angeordneten Sensoren erfasste Messwerte und/oder aus den Messwerten abgeleitete Daten.

Der Prozess kann beispielsweise ein subtraktiver oder additiver Bearbeitungsprozess beziehungsweise Fertigungsprozess sein. Somit kann es sich beim Werkzeug um ein Zerspanungswerkzeug oder Scheidwerkzeug zum Bohren, Fräsen, Drehen, Schleifen, Honen, etc. oder um ein Laser oder eine Düse handeln.

Es ist auch denkbar, dass der Prozess ein Messprozess ist, bei dem beispielsweise ein Werkstück ausgemessen beziehungsweise vermessen wird. Bei dem Werkzeug kann es sich somit um ein Messwerkzeug handeln, beispielsweise um eine Sensorvorrichtung, insbesondere um einen Sensor, z.B. einen Laserscanner, Ultraschallsensor oder Parabolspiegel, die in einer Werkzeugaufnahme eines Arms der Werkzeugmaschine befestigt werden kann.

Beispielsweise kann es sich um einen Messprozess mit Ultraschallsensoren handeln. Bei so einem Prozess kann die Oberfläche eines Werkstücks, z.B. auf ihre Porosität, untersucht werden. Der Schall kann mit Hilfe von Wasserstrahlen einer Werkstückoberfläche (z.B. von mehreren Seiten) zugeführt werden. Anschließend kann die Reaktion des Werkstücks mit einem oder mehreren Ultraschallsensoren vermessen werden, wobei die Ultraschallsensoren in Werkzeugaufnahmen positioniert sein können und somit ein "Messwerkzeug" darstellen.

Es versteht sich, dass es sich bei einer Werkzeugmaschine auch um einen Roboter beziehungsweise einen Roboterarm handeln kann, da ein Roboter - aus steuertechnischer Sicht - als eine Werkzeugmaschine mit einer Roboterkinematik angesehen werden kann. Die Roboter weisen - hauptsächlich - Rundachsen auf.

Bei einer Ausführungsform kann es vorgesehen sein, dass die Werkzeugbahnanalyse-Komponente dazu konfiguriert ist, die Signale und das Zusatzsignal an einer Anzeigeeinrichtung zu visualisieren.

Bei einer Ausführungsform kann es vorgesehen sein, dass die Steuereinrichtung eine Parametrierung aufweist, wobei die Parametrierung den zumindest einen Grenzwert umfasst.

Bei dem Grenzwert kann es sich beispielsweise um eine Dynamikgrenze der Achse, beispielsweise der Vorschubachse der Werkzeugmaschine handeln.

Eine mögliche Ursache für Geschwindigkeitseinbrüche sind die Dynamikgrenzen der Vorschubachsen der Werkzeugmaschine. Jede Maschinenachse hat eine vom Maschinenhersteller festgelegte Geschwindigkeits-, Beschleunigungs- und Ruckgrenze. Darüber hinaus kann noch eine auf die Werkzeugbahn (Tool Center Point) bezogene Ruckgrenze vorgesehen sein. Die Dynamikgrenzen sind Teil der Parametrierung der CNC (NC-Steuerung). Sie begrenzen die Dynamik der Achsen entsprechend der konstruktiven, elektrischen oder regelungstechnischen Vorgaben / Projektierung des Inverkehrbringers / Maschinenherstellers.

Mit anderen Worten kann durch die Dynamikgrenzen unter anderem gewährleistet werden, dass die entsprechenden Achsen nicht Kräfte erfahren, die beispielsweise zu ihren konstruktiven irreversiblen Veränderungen führen können.

Bei Robotern (geringere Steifigkeit und deshalb geringere Eigenfrequenzen) können durch die Dynamikgrenzen bestimmte Schwingungen reduziert beziehungsweise vermieden werden.

Wird eine Achse schneller als vom Teileprogramm vorgegeben verfahren, kann dies zu einem oder mehreren Geschwindigkeitseinbrüchen, weil die Steuereinrichtung, beispielsweise die CNC den Vorschub reduziert, um die Dynamikgrenzen nicht zu überschreiten.

Bei einer Ausführungsform kann es vorgesehen sein, dass die Prozessdaten für Position der zumindest einen Achse und/oder des Werkzeugs repräsentative Daten, insbesondere Positionsdaten der Achse, die vorzugsweise für Werkzeugposition repräsentativ sind, umfassen.

Anschließend kann die Werkzeugbahnanalyse-Komponente beispielsweise über die Ableitung des Werkzeugpfades (der Werkzeugbahn) beziehungsweise der Positionen der Maschinenachsen nach der Zeit die tatsächlichen Geschwindigkeiten, Beschleunigungen und Rücke ermitteln. Die Werkzeugbahnanalyse-Komponente kann dann beispielsweise prüfen, ob an den jeweiligen Koordinaten eine der Dynamikgrenzen überschritten wurde.

Bei einer Ausführungsform kann es vorgesehen sein, dass die Werkzeugbahnanalyse-Komponente beispielsweise über eine Farbkodierung und Zusatzinformation darauf hinweist, wo in der Punktewolke, die die Visualisierung der Werkzeugbahn bildet, welche Dynamikgrenze überschritten worden ist.

Dadurch kann die Information darüber gewonnen werden, wo genau am Werkstück die Grenzwerte, insbesondere die Dynamikgrenzen erreicht oder überschritten wurden. Ist beispielsweise an einer bestimmten Stelle im Werkstück eine ungewünschte und entsprechend gekennzeichnete Oberflächenmarke oder ein sonstiger lokaler Geschwindigkeitseinbruch ersichtlich, so kann dieser Effekt mit dem Überschreiten oder Erreichen des Grenzwertes und insbesondere der Dynamikgrenzen der jeweiligen Achse oder eines Maschinenkanals in Verbindung gebracht werden.

Es bietet sich dann die Möglichkeit, entweder das Teileprogramm anzupassen oder die Aufspannsituation zu ändern, sodass die Grenzwerte nicht mehr erreicht werden.

Beispielsweise können für verschiedene G-Funktionen unterschiedliche Dynamikgrenzen gelten.

Bei einer Ausführungsform kann es vorgesehen sein, dass die Prozessdaten einen Bezug zum Teileprogramm aufweisen, welches auf der Steuereinrichtung und insbesondere auf einer NC-Steuerung (NC für engl. numerical control) abläuft. Insbesondere enthalten die Prozessdaten Bezug zu bestimmten G-Funktionen (die z.B. bestimmten Dynamikgruppen der Werkzeugmaschine, z.B. Schlicht-, Schruppbearbeitung, Positionieren etc. entsprechen können) und vorzugsweise zu G-Code-Zeilen, sodass die Suche nach möglichen Fehlern und Ursachen vereinfacht wird.

Die Prozessdaten können also einen Bezug zu einem Teileprogramm für den Bearbeitungsprozess beziehungsweise zu dem Teileprogramm des Bearbeitungsprozesses aufweisen, wobei die Prozessdaten insbesondere einen Bezug zu G-Funktionen des Teileprogramms und vorzugsweise zu G-Code-Zeilen Teileprogramms enthalten

Mit anderen Worten können die Prozessdaten folgende Informationen umfassen. Die Prozessdaten können Achsenposition jeder Achse einer mehrachsigen (3, 4, 5, 6, ...) Werkzeugmaschine umfassen. Darüber hinaus können die Prozessdaten Werkzeugpositionen im Raum- beziehungsweise Werkstückkoordinatensystem umfassen. Außerdem können die Prozessdaten Information darüber aufweisen, welche G-Funktion, d. h. eine bestimmte Funktion im Teileprogramm, gerade aktiv ist (wenn das Verfahren in Echtzeit ausgeführt wird) oder aktiv war. Die Prozessdaten können also einen Bezug zwischen den Achsenpositionen, den Werkzeugpositionen und den bestimmten G-Funktionen enthalten, sodass bestimmte G-Funktionen den Achsenpositionen und den Werkzeugpositionen zugewiesen werden können.

Bei einer Ausführungsform kann es vorgesehen sein, dass die Werkzeugbahnanalyse-Komponente dazu konfiguriert ist, aus den Signalen zur Visualisierung der Werkzeugbahn, die beispielsweise in einem Werkstückkoordinatensystem generiert werden, Positionsdaten der zumindest einen Achse, beispielsweise in einem Werkzeugmaschinenkoordinatensystem zu ermitteln. Hierdurch wird die Erkenntnis erlangt, welche Achse und wie, in Bezug auf das Werkstückkoordinatensystem, beteiligt war.

Bei einer Ausführungsform kann es vorgesehen sein, dass die zumindest eine Größe eine physikalische, zeitabhängige Größe ist, die die Achsenbewegung vorzugsweise unmittelbar beschreibt.

Bei einer Ausführungsform kann es vorgesehen sein, dass die zumindest eine Größe Geschwindigkeit, Beschleunigung, Ruck oder Stoß ist. Dabei kann es sich um einen auf die Geschwindigkeit bezogenen und/oder auf die Position bezogenen Ruck handeln.

Bei den Grenzwerten kann es sich um eine oder mehrere der folgenden Dynamikgrenzen der Maschine handeln: maximale Achsengeschwindigkeit - MAX AX_GESCHW, maximale Achsenbeschleunigung - MAX_AX_BESCHL, maximaler Achsenruck - MAX_AX_RUCK, maximaler Ruck der Werkzeugspitze - MAX_BAHN_RUCK. Diese Grenzen können im Teileprogramm geändert, angepasst werden.

Die Dynamikgrenzen sind üblicherweise in der Maschinenkonfiguration (in Kanal- beziehungsweise Achsmaschinendaten) abgelegt und können der Werkzeugbahnanalyse-Komponente zur Verfügung gestellt oder von der Werkzeugbahnanalyse-Komponente abgerufen werden.

Die Werkzeugbahn eine von dem Werkzeug, insbesondere von dem Tool-Center-Point (z.B. von der Werkzeugspitze oder von dem Werkzeugmittelpunkt (bei Kugelfräsern)) hinterlegte oder, wenn der Prozess vor seiner tatsächlichen Durchführung simuliert wird, zu hinterlegende Trajektorie (Bewegungsweg oder Bahn) ist.

Bei einer Ausführungsform kann es vorgesehen sein, dass die Visualisierung eine 2D- oder 3D-Visualisierung ist.

Bei einer Ausführungsform kann es vorgesehen sein, dass die die Werkzeugbahnanalyse-Komponente dazu konfiguriert ist, die Prozessdaten im Betrieb, i.e., während des Betriebs der Werkzeugmaschine zu erhalten. Es handelt sich somit um Echtzeit-Daten.

Bei einer Ausführungsform kann es vorgesehen sein, dass die Werkzeugbahnanalyse-Komponente dazu konfiguriert ist, das Zusatzsignal oder ein weiteres Zusatzsignal zu generieren, wenn die zumindest eine Größe einen, z.B. von einem Bediener vorgebbaren von dem zumindest einen Grenzwert abhängigen Schwellenwert überschreitet. Der Schwellenwert kann z.B. als Bruchteil von dem Grenzwert festgelegt werden.

Insbesondere handelt es sich bei solchen Schwellenwerten um benutzerdefinierte Warngrenzen. Das Zusatzsignal oder das weitere Zusatzsignal wird somit dann generiert, wenn sich der Wert der zumindest einen Größe dem Grenzwert, beispielsweise der Dynamikgrenze zu nahe kommt.

Bei einer Ausführungsform kann es vorgesehen sein, dass die Achse eine Vorschubachse ist und die Achsenbewegung eine Vorschubbewegung ist.

Bei einer Ausführungsform kann es vorgesehen sein, dass die Werkzeugmaschine zwei oder mehr Achsen umfasst, wobei die Werkzeugbahnanalyse-Komponente dazu konfiguriert ist, die zumindest eine Größe für jede Achse zu ermitteln und die Überschreitung des zumindest einen Grenzwerts zu prüfen.

Bei mehrachsigen Werkzeugmaschinen können zwei oder mehr Achsen (softwaretechnisch) zu einem (Werkzeugmaschinen-)Kanal zusammengefasst werden. Beispielsweise kann die Steuerung der Werkzeugmaschine beziehungsweise des Roboters so programmiert werden, dass mehrere Achsen gleichzeitig in einer gemeinsamen Bewegung (als eine Einheit) bewegt werden. In diesem Fall kann von einer Kanalbewegung gesprochen werden.

Der Kanalbewegung kann ebenfalls Grenzwerte, z.B. Dynamikgrenzen zugewiesen werden. Beispielsweise kann die Parametrierung einer NC-Steuerung Kanal-Grenzwerte umfassen. Für gewöhnlich ist eine Kanalbewegung langsamer als die Bewegungen einzelner Achsen. Das Einhalten der der Kanalbewegung zugewiesenen Grenzwerte ist somit sicherer.

Die Kanal-Grenzwerte stellen beispielsweise Dynamikgrenzen für das Zusammenwirken der Achsen auf Ihrer Bahn, Bahnruck, Bahngeschwindigkeit, Bahnbeschleunigung.

Auch die Maschinendaten die die Bahn dynamisch begrenzen können hier relevant werden.

Es kann dabei zweckmäßig sein, wenn unterschiedlichen Achsen unterschiedliche Grenzwerte für die zumindest eine Größe zugewiesen sind, wobei die Werkzeugbahnanalyse-Komponente dazu konfiguriert ist, die Überschreitung des entsprechenden zumindest einen Grenzwerts für jede Achse zu prüfen.

Darüber hinaus kann es mit Vorteil vorgesehen sein, wenn die Werkzeugbahnanalyse-Komponente dazu eingerichtet ist, für unterschiedliche Achsen unterschiedliche Zusatzsignale zu generieren, die vorzugsweise zur unterschiedlichen, z.B. in Gestaltung, Kennzeichnung führen.

Die Aufgabe wird außerdem mit einer Steuereinrichtung mit oben beschriebenem System gelöst.

Bei einer Ausführungsform kann es vorgesehen sein, dass die Steuereinrichtung ein auf der Steuereinrichtung ausführbares Teileprogramm (NC-Programm, G-Code-File) aufweist. Beispielsweise kann die Steuereinrichtung eine NC-Steuerung umfassen beziehungsweise als eine NC-Steuerung ausgebildet sein. Darüber hinaus kann die Steuereinrichtung eine Rechenvorrichtung (z.B. einen industriellen Rechner (industrial PC), beispielsweise in Form eines Edge-Geräts, oder Laptop, etc.) umfassen.

Die Aufgabe wird auch mit einer Werkzeugmaschine mit zumindest einer Achse zum Bewegen eines Werkzeugs, beispielsweise zum subtraktiven oder additiven Fertigen eines Werkstücks und mit einer oben genannten Steuereinrichtung.

Bei einer Ausführungsform kann es vorgesehen sein, dass die Werkzeugmaschine ferner eine der Steuereinrichtung zugeordnete Anzeigeeinrichtung umfasst, auf welcher die Signale und das Zusatzsignal, vorzugsweise gleichzeitig visualisierbar sind.

Die Aufgabe wird außerdem mit einem eingangs genannten Verfahren erfindungsgemäß dadurch gelöst, dass geprüft wird, ob die ermittelte Größe zumindest einen, der zumindest einen Größe zugewiesenen Grenzwert überschreitet, beim Überschreiten des Grenzwerts zumindest ein Zusatzsignal zur, beispielsweise visuellen, Kennzeichnung zumindest eines Bereichs der Werkzeugbahn, an dem der Grenzwert überschritten ist, generiert wird.

Obendrein wird die Aufgabe mit einem Computerprogramm gelöst, welches Befehle umfasst, die bei der Ausführung des Programms durch einen Computer diesen veranlassen, das vorgenannte Verfahren auszuführen.

Zusammenfassend ermöglicht das vorliegend Offenbarte, eine Meldung beziehungsweise eine Serie von Meldungen an den Bediener der Werkzeugmaschine beziehungsweise des Roboters zu generieren, aus der hervorgeht, wo und weshalb Grenzwerte überschritten werden, die auf die an dem Fertigungsprozess beteiligten Achsen und/oder auf die Werkzeugbahn bezogen sind.

Der Anwender benötigt also kein tiefgreifendes mechatronisches Wissen, um Bahngeschwindigkeitseinbrüche/Stellen eingeschränkter Produktivität und Qualität auf das Erreichen von Grenzwerten zurückführen zu können. Mit wenigen Mausklicks kann solch eine Analyse realisiert werden. Führt der Anwender die Analyse mit virtuellen Daten aus dem virtuellen NCK durch was in diesem Fall nicht weniger aussagekräftig ist als mit Daten der realen Maschine dann erhält er bereits eine Aussage, ob die Dynamikwerte eingehalten werden können, ohne auch nur ein einziges Fehlteil produzieren zu müssen. Auf Basis von aufgezeichneten Sollwerten kann die Fertigung in der virtuellen Welt vollständig validiert werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: ein System zur automatisierten Unterstützung einer Inspektion und/oder Überwachung eines Bearbeitungsprozess,
- FIG 2: eine Visualisierung eines Werkzeugpfades,
- FIG 3: eine Visualisierung eines Werkzeugpfades,
- FIG 4: eine Werkzeugmaschine,
- FIG 5: eine Kennzeichnung von Informationen an einem Werkzeugpfad, und
- FIG 6: ein Ablaufdiagramm eines computergestützten Verfahrens zur automatisierten Unterstützung einer Inspektion und/oder Überwachung eines Prozesses.

In den Ausführungsbeispielen und Figuren können gleiche oder gleich wirkende Elemente jeweils mit den gleichen Bezugszeichen versehen sein.

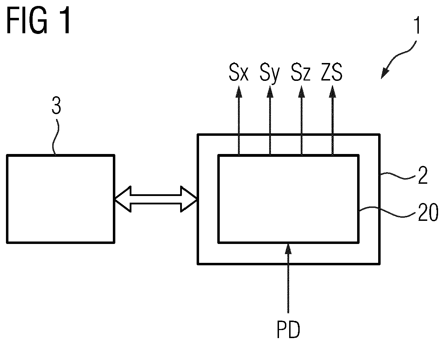

FIG 1 zeigt ein System 1, welches einem System zur automatisierten Unterstützung einer Inspektion und/oder Überwachung eines Bearbeitungsprozess entspricht.

Das System 1 umfasst einen Speicher 2. Auf dem Speicher 2 können maschinenausführbare beziehungsweise computerausführbare Komponenten gespeichert werden.

Mit dem Speicher 2 ist ein Prozessor 3, der beispielsweise als eine elektronische Schaltung ausgeführt werden kann, operativ gekoppelt. Der Prozessor 3 ist dazu konfiguriert, die maschinenausführbaren Komponenten auszuführen.

Vorliegend umfassen die maschinenausführbaren Komponenten eine Werkzeugbahnanalyse-Komponente 20. Die Werkzeugbahnanalyse-Komponente 20 kann beispielsweise als eine Software, insbesondere als ein Software-Modul ausgeführt sein. Jedenfalls umfasst die Werkzeugbahnanalyse-Komponente 20 Befehle beziehungsweise Instruktionen, die der Prozessor 3 abarbeiten kann.

Die Werkzeugbahnanalyse-Komponente 20 ist dazu konfiguriert Prozessdaten PD zu erhalten oder die Prozessdaten PD beispielsweise abzurufen.

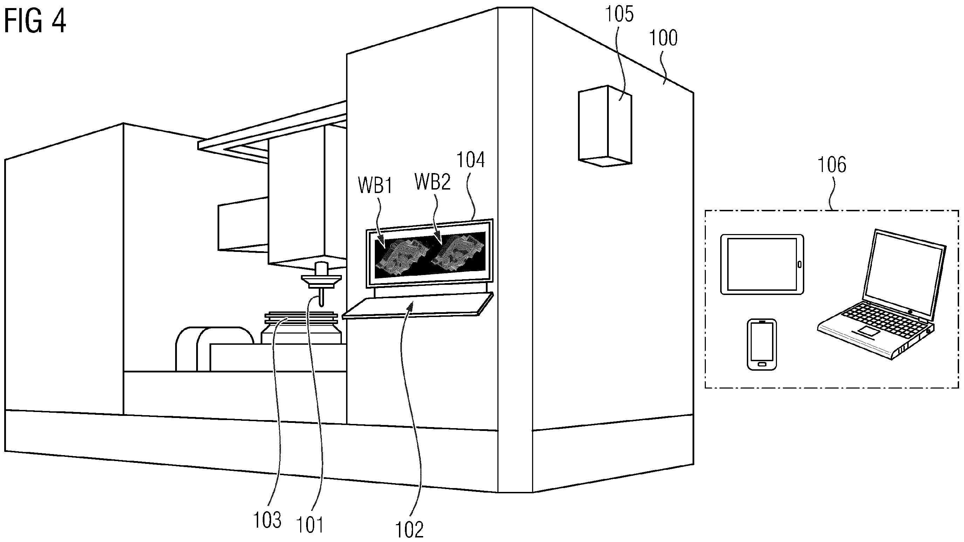

Die Prozessdaten PD enthalten von an und/oder in der Werkzeugmaschine 100 (siehe FIG 4) angebrachten bzw. angeordneten Sensoren (nicht gezeigt) erfasste Messwerte und/oder aus den Messwerten abgeleitete Daten, z.B. KPIs (Key Performance Indicators), sekundäre Messgrößen, etc.

Vorliegend sind die Prozessdaten PD für einen Bearbeitungsprozess repräsentativ, welcher von einer zumindest eine Achse zum Bewegen eines Werkzeugs 101 und eine Steuereinrichtung zum Steuern der zumindest einen Achse aufweisenden Werkzeugmaschine 100 ausgeführt wird, um ein Werkstück 103 zu bearbeiten (siehe FIG 4). Die Achse ist beispielsweise eine Vorschubachse. Vorzugsweise handelt es sich um subtraktive Bearbeitung.

Die Werkzeugbahnanalyse-Komponente 20 ist dazu konfiguriert, aus den Prozessdaten PD Signale Sx, Sy, Sz zur Visualisierung einer Bahn des Werkzeugs - einer Werkzeugbahn WB1, WB2 - zu generieren.

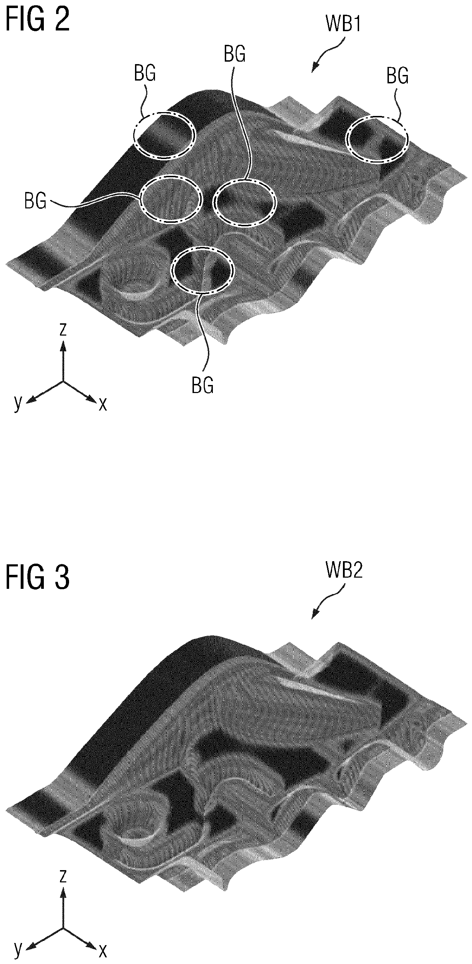

FIG 2 und FIG 3 veranschaulichen eine solche Visualisierung. Die Werkzeugbahn WB1 und WB2 kann beispielsweise in einem kartesischen Koordinatensystem X, Y, Z visualisiert werden. Vorliegend wird die Werkzeugbahn WB1, WB2 visualisiert, die ein Werkzeug, beispielsweise ein Werkzeug 101 der FIG 4 bei einem subtraktiven Bearbeitungsprozess abfährt. Eine solche Werkzeugbahn WB1, WB2 entspricht auch der Oberfläche des Werkstücks, beispielsweise des Werkstücks 103 der FIG 4, die bei der Bearbeitung mit dem Werkzeug entsteht.

Die Signale Sx, Sy, Sz können beispielsweise die Position des Werkzeugs im Koordinatensystem X, Y, Z beschreiben.

Darüber hinaus ist die Werkzeugbahnanalyse-Komponente 20 dazu konfiguriert, Größen zu ermitteln, welche eine Achsenbewegung der zumindest einen Achse charakterisieren.

Für die ermittelte Größe kann ein weiteres Signal zu einer entsprechenden Kennzeichnung der Größe an bzw. entlang der Werkzeugbahn WB1, WB2 generiert werden. Beispielsweise kann die Werkzeugbahn WB1, WB2 entsprechend den ermittelten Werten der zumindest einen Größe eingefärbt werden. Dies ist in FIG 2 und FIG 3 in Graustufen veranschaulicht.

Die Größe kann beispielsweise eine physikalische, zeitabhängige Größe sein, die die Achsenbewegung vorzugsweise unmittelbar beschreibt.

Insbesondere ist die Größe eine Geschwindigkeit, eine Beschleunigung, oder ein Ruck der entsprechenden Achse.

Beispielsweise kann die Größe eine entsprechende Komponente der Geschwindigkeit, der Beschleunigung, oder des Rucks im Koordinatensystem X, Y, Z sein.

Darüber hinaus ist die Werkzeugbahnanalyse-Komponente 20 dazu konfiguriert, zu prüfen, ob die ermittelte Größe zumindest einen, der zumindest einen Größe zugewiesenen Grenzwert überschreitet.

Bei dem Grenzwert kann es sich beispielsweise um eine Dynamikgrenze der Achsen, beispielsweise der Vorschubachse der Werkzeugmaschine handeln.

Jede Maschinenachse hat eine beispielsweise vom Maschinenbauer festgelegte Geschwindigkeits-, Beschleunigungs- und Ruckgrenze. Weiterhin kann noch eine auf die Werkzeugbahn (Tool Center Point) WB1, WB2 bezogene Ruckgrenze vorgesehen sein. Diese Werte sind auch als Dynamikgrenzen bekannt.

Die Grenzwerte, insbesondere die Dynamikgrenzen können Teil eine Parametrierung einer NC-Steuerung (NC für numerical control), beispielsweise der NC-Steuerung 102 der Steuereinrichtung der Werkzeugmaschine 100 der FIG 4. Die Grenzwerte verhindern, dass entsprechende Achse schneller verfahren wird als vom Teileprogramm vorgegeben. Sollte es zu solch einem Fall kommen, reduziert die NC-Steuerung die entsprechende Größe, z.B. den Vorschub, um die Grenzwerte, insbesondere die Dynamikgrenzen nicht zu überschreiten.

Dies kann beispielsweise zu Einbrüchen der zumindest einen Größe, beispielsweise zu den Geschwindigkeitseinbrüchen führen, die sich an der Oberflächenqualität des Werkstücks bemerkbar machen können.

Die Werkzeugbahnanalyse-Komponente 20 ist dazu konfiguriert, zumindest ein Zusatzsignal ZS zu generieren, wenn zumindest ein der Grenzwerte, vorzugsweise der Dynamikgrenzen, erreicht oder überschritten wird. Das Zusatzsignal ZS dient einer vorzugsweise visuellen Kennzeichnung jenes Bereichs beziehungsweise jener Bereiche BG der Werkzeugbahn WB1, in dem der Grenzwert erreicht oder überschritten worden ist.

FIG 3 ist zu entnehmen, dass die Werkzeugbahn WB2 abgefahren worden ist, ohne dass die Grenzwerte erreicht oder überschritten worden sind. Die Werkzeugbahn WB2 entspricht einem Prozess, bei dem basierend auf den Informationen der FIG 2 entsprechende Korrekturen im Bearbeitungsprozess vorgenommen worden sind, vorzugsweise die entsprechende Regelstrecke optimiert worden ist.

Die Werkzeugbahnanalyse-Komponente 20 kann dazu konfiguriert sein, die Signale Sx, Sy, Sz und das Zusatzsignal ZS an einer Anzeigeeinrichtung, beispielsweise an einer Anzeigeeinrichtung 104 der Werkzeugmaschine 100 der FIG 4 zu visualisieren.

Die Kennzeichnung kann als eine, beispielsweise oval- oder rechteckförmige Umrandung ausgebildet sein.

Die Kennzeichnung umfasst vorzugsweise Informationen darüber, welcher Grenzwert genau erreicht beziehungsweise überschritten worden ist. Insbesondere umfasst die Kennzeichnung die Information über die zumindest eine Größe und/oder die zumindest eine Achse. Diese Informationen können beispielsweise in einem Zusatzfenster an der Anzeigevorrichtung eingeblendet werden.

Darüber hinaus kann die Kennzeichnung Informationen darüber umfassen, wie viel Prozent des Grenzwertes erreicht worden ist oder um wie viel Prozent der Grenzwert überschritten worden ist.

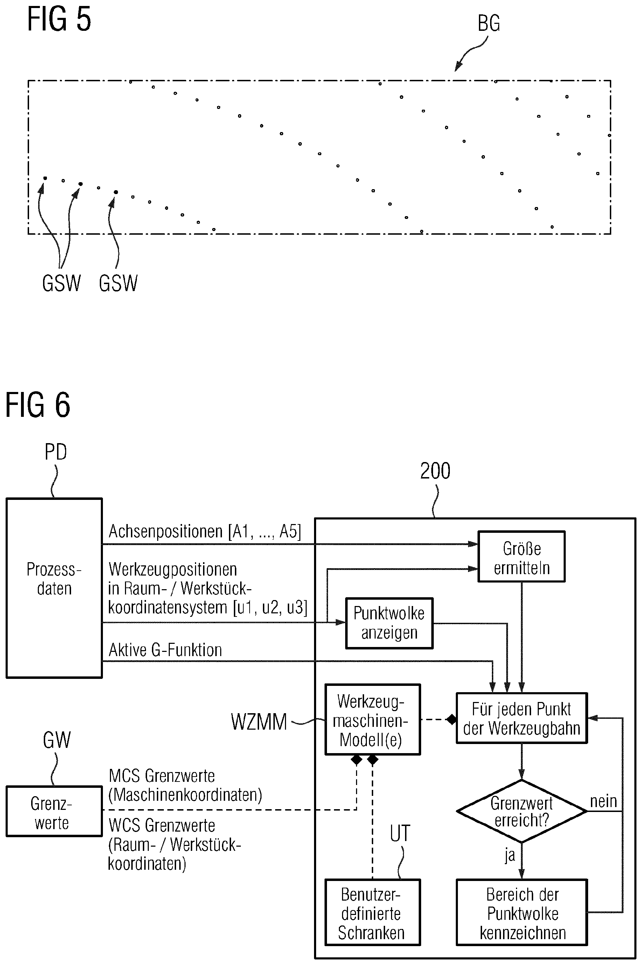

Die Kennzeichnung solcher Informationen ist beispielsweise in FIG 5, die einen vergrößerten Ausschnitt eines der Bereiche BG der FIG 2 darstellt, veranschaulicht.

Die Kennzeichnung der Bereiche BG bewirkt, dass eine Abweichung der zumindest einen Größe an einer bestimmten Position der Werkzeugbahn WB1, WB2 unmittelbar feststellbar und ablesbar ist. Die Informationen in der Kennzeichnung ermöglichen unter anderem, die Ursache der Geschwindigkeitseinbrüche, die zu den Bereichen BG geführt haben, festzustellen.

Um unmittelbare Ablesbarkeit zu verbessern, kann die Position in Farbe, beispielsweise als ein gefärbter Punkt, und/oder das Ausmaß der Abweichung gemäß einer Farbskala angezeigt werden. Alternativ oder zusätzlich können die Punkte unterschiedlich ausgestaltet sein. FIG 5 lässt drei Punkte GSW erkennen, die als gefüllte Kreise dargestellt sind. Alle anderen Punkte sind als leere Kreise zu erkennen. In einer farbigen Zeichnung kann ein gefüllter Kreis als ein roter Punkt und ein leerer Kreis als grüner Punkt dargestellt werden.

Das Bezugszeichen "GSW" und die auf die Punkte zeigende Pfeile können ebenfalls visualisiert werden. Im eingeblendeten "GSW" kann beispielsweise ein Hinweis darauf enthalten sein, bei welcher Achse und/oder welchem Kanal welcher Grenzwert beziehungsweise welcher benutzerdefinierte Schwellenwert erreicht oder überschritten wurde.

Es kann vorgesehen sein, dass die Prozessdaten PD für Position der zumindest einen Achse repräsentative Daten, insbesondere Positionsdaten der Achse, die vorzugsweise für Werkzeugposition repräsentativ sind, umfassen.

Die zumindest eine Größe kann beispielsweise aus Positionsdaten durch Ableiten (nach der Zeit) ermittelt werden.

Die Werkzeugbahn WB1, WB2 kann als eine 2D- oder 3D-Kontur beziehungsweise -Linie visualisiert werden. Auch mehr Dimensionen bei der Visualisierung sind denkbar: 3D-Kontur und Einfärbung (der Punktewolke) - 4D; 3D-Kontur und Einfärbung und Strichdicke - 5D; 3D und 3D-Vector (um beispielsweise Krümmungsrichtung aufzuzeigen) - 6D.

Die Werkzeugbahnanalyse-Komponente 20 kann darüber hinaus dazu konfiguriert sein, das Zusatzsignal zu generieren, wenn die zumindest eine Größe einen, beispielsweise von einem Bediener vorgebbaren von dem zumindest einen Grenzwert abhängigen Schwellenwert überschreitet.

Der Schwellenwert kann z.B. als Bruchteil von dem Grenzwert festgelegt werden.

Dabei kann die Kennzeichnung vorzugsweise angeben beziehungsweise Informationen darüber enthalten, um wie viel Prozent der Schwellenwert überschritten worden ist.

FIG 4 zeigt eine Werkzeugmaschine 100, die beispielsweise ein System 1 der FIG 1 umfassen kann. Die Werkzeugmaschine 100 kann mehrere Achsen, beispielsweise Vorschubachsen, zum Bewegen des Werkzeugs 101 und eine Steuereinrichtung, die eine NC-Steuerung 102 zum Steuern der Achsen umfasst. Beispielsweise handelt es sich bei der Werkzeugmaschine 100 um eine 5- oder 6-achsige Werkzeugmaschine.

Im Betrieb bearbeitet die Werkzeugmaschine 100 für gewöhnlich ein Werkstück 103. Vorzugsweise handelt es sich um eine subtraktive Bearbeitung. Es versteht sich, dass das System 1 auch bei einem Prozess einer additiven Fertigung eingesetzt werden kann.

Das System 1 kann beispielsweise in der Steuereinrichtung, insbesondere in der NC-Steuerung 102 implementiert werden.

Die Steuereinrichtung kann außerdem weitere, beispielsweise von der NC-Steuerung 102 baulich getrennt ausgebildete Einheiten umfassen.

Beispielsweise kann die Steuereinrichtung ein Edge-Gerät 105 umfassen. Das Edge-Gerät 105 kann beispielsweise als ein industrieller Computer ausgebildet und dazu eingerichtet sein, die Prozessdaten PD zu erfassen, diese zwischenzuspeichern, vorzuverarbeiten, einer Cloud-Plattform (hier nicht gezeigt) zur Verfügung zu stellen, etc.

Das System 1 kann auch in einem solchen Edge-Gerät 105 implementiert sein und beispielsweise die Anzeigeeinrichtung 104 der NC-Steuerung 102 zum Visualisieren der Signale Sx, Sy, Sz und des Zusatzsignals ZS verwenden.

Die Steuereinrichtung kann darüber hinaus ein oder mehrere weitere vorzugsweise mobile Geräte 106 umfassen, beispielsweise Smartphone, Laptop, Tablett, etc. Das System 1 kann in jedem dieser, beispielsweise über ein lokales Netzwerk mit dem Edge-Gerät 105 und/oder mit der NC-Steuerung 102 verbundenen Geräte implementiert werden. Alternativ oder zusätzlich können die Geräte 106 mit der Cloud-Plattform verbunden sein.

Vorzugsweise ist die Werkzeugbahnanalyse-Komponente 20 dazu konfiguriert, die Prozessdaten PD im Betrieb, i.e., während des Betriebs der Werkzeugmaschine 100 zu erhalten. Somit handelt es sich um in Echtzeit empfangene Prozessdaten PD.

Bei einer mehrachsigen Werkzeugmaschine 100 kann die Werkzeugbahnanalyse-Komponente 20 dazu konfiguriert sein, die zumindest eine Größe für jede Achse zu ermitteln und zu prüfen, ob der zumindest eine Grenzwert erreicht oder überschritten worden ist.

Dabei können unterschiedlichen Achsen unterschiedliche Grenzwerte für die zumindest eine Größe zugewiesen sein, wobei die Werkzeugbahnanalyse-Komponente 20 dazu konfiguriert sein kann, für jede Achse zu prüfen, ob der entsprechende zumindest eine Grenzwert erreicht oder überschritten worden ist.

Die Werkzeugbahnanalyse-Komponente 20 kann dazu eingerichtet sein, für unterschiedliche Achsen unterschiedliche Zusatzsignale zu generieren, die vorzugsweise zur unterschiedlichen (z.B. in Gestaltung) Kennzeichnung führen. Beispielsweise kann jede Achse eine bestimmte Farbe der Kennzeichnung zugewiesen sein, wobei für unterschiedliche Achsen unterschiedliche Farben verwendet werden können.

Die Parametrierung der NC-Steuerung 102 weist vorzugsweise für jede Achse zumindest einen Grenzwert für die zumindest eine Größe auf.

Es versteht sich, dass die Steuereinrichtung, insbesondere NC-Steuerung 102 einen maschinell ausführbaren Programmcode, beispielsweise ein Teileprogramm beziehungsweise G-Code-File umfasst.

FIG 6 zeigt ein Ablaufdiagramm, auf dem ein computergestütztes Verfahren zur automatisierten Unterstützung einer Inspektion und/oder Überwachung eines Prozesses der subtraktiven Bearbeitung, welches ausgeführt wird, wenn eine Werkzeugbahnanalyse-Komponente auf einer Recheneinrichtung, beispielsweise die Werkzeugbahnanalyse-Komponente 20 auf der Steuereinrichtung, abläuft.

Die Werkzeugbahnanalyse-Komponente 200 erhält beispielsweise während des Betriebs der Werkzeugmaschine Prozessdaten PD, die für den Bearbeitungsprozess repräsentativ sind.

Die Prozessdaten PD können beispielsweise folgende Informationen umfassen. Die Werkzeugmaschine ist beispielsweise eine fünfachsige Werkzeugmaschine, sodass die Prozessdaten PD Achsenposition A1, ..., A5 umfassen ("Achsenposition [A1, ..., A5]" in FIG 6). Darüber hinaus umfassen die Prozessdaten PD Werkzeugpositionen im Raum- beziehungsweise Werkstückkoordinatensystem u1, u2, u3. Außerdem können die Prozessdaten PD Information darüber aufweisen, welche G-Funktion, d. h. eine bestimmte Funktion im Teileprogramm, dass auf der Steuereinrichtung, insbesondere auf der NC-Steuerung ausgeführt wird, gerade aktiv ist ("Aktive G-Funktion" in FIG 6). Auf dieser Weise ist es möglich einen Bezug zwischen den G-Code-Zeilen und den Prozessdaten PD zu erstellen. Mit anderen Worten können den Achsenpositionen A1, ..., A5 und den Werkzeugpositionen u1, u2, u3 eine bestimmte G-Funktion zugewiesen sein.

Die Prozessdaten PD können der Werkzeugbahnanalyse-Komponente 200 in Form entsprechender Signale (siehe FIG 6) zur Verfügung gestellt werden.

Außerdem erhält die Werkzeugbahnanalyse-Komponente 200 der entsprechenden Achsen und der entsprechenden Größen zugewiesene Grenzwerte GW. Insbesondere umfassen die Grenzwerte GW Grenzwerte in Maschinenkoordinaten - die "MCS-Grenzwerte" MAX_AX_GESCHW[0..5]<1..5>; MAX_AX_BESCHL[0..5]<1..5>; MAX_AX_RUCK[0..5]<1..5> - und die Grenzwerte in Raum-/ Werkstückkoordinaten - die "WCS-Grenzwerte" MAX_BAHN_RUCK[0..5].

Darüber hinaus kann die Werkzeugbahnanalyse-Komponente 200 benutzerdefinierte Schranken beziehungsweise Schwellenwerte UT umfassen - GESCHW_LIM [in % vom Grenzwert], BESCHL_LIM [in % vom Grenzwert], RUCK_LIM [in % vom Grenzwert], wobei jede Schranke einem Grenzwert korrespondiert. Um die Schranken anzupassen, kann die Werkzeugbahnanalyse-Komponente 200 zweckmäßigerweise eine Schnittstelle, insbesondere eine Benutzerschnittstelle aufweisen, über die die Schranken beziehungsweise die Schwellenwerte geändert werden können.

Die Grenzwerte GW und/oder die benutzerdefinierten Schranken UT können einem oder mehreren Werkzeugmaschinenmodellen WZMM zugeführt werden, die beispielsweise die Werkzeugbahnanalyse-Komponente 200 umfasst. Die Werkzeugmaschinenmodelle WZMM umfassen im einfachsten Fall die Grenzwerte GW und die die benutzerdefinierten Schranken UT. D.h. die Grenzwerte GW können in der Werkzeugbahnanalyse-Komponente 20 gespeichert sein oder Werkzeugbahnanalyse-Komponente 20 kann die Grenzwerte GW von der NC-Steuerung herunterladen.

Aus den Prozessdaten PD generiert die Werkzeugbahnanalysekomponente 200 Signale zur Visualisierung der Werkzeugbahn. Die Werkzeugbahn kann beispielsweise in Form einer Punktwolke in einem kartesischen Koordinatensystem angezeigt werden ("Punktwolke anzeigen" in FIG 6).

Anhand der Achsenpositionen A1, ..., A5 umfassen und/oder Werkzeugpositionen, beispielsweise im Raum- beziehungsweise Werkstückkoordinatensystem u1, u2, u3 können durch Ableiten nach der Zeit Geschwindigkeit, Beschleunigung, Stoß, geschwindigkeitsbezogener, und positionsbezogener Ruck ermittelt werden - AKT_AX_GESCHW<1..5>; AKT_AX_BESCHL<1..5>; AKT_AX_RUCK<1..5>; und AKT_BAHN_RUCK[0..5] ("Größe ermitteln" in FIG 6). Es werden also jene Größen ermittelt, die die Achsenbewegung der entsprechenden Achse charakterisieren.

Für jeden Punkt der Werkzeugbahn wird anschließend geprüft, ob die ermittelte Größe zumindest einen, dieser Größe zugewiesenen Grenzwert erreicht oder überschreitet. Dabei kann jeder Punkt mit der G-Funktion assoziiert sein, die ausgeführt wird, um diesen Punkt zu erzeugen.

Wird einer der entsprechenden Grenzwerte MAX_AX_GESCHW[0..5]<1..5>, MAX_AX_BESCHL[0..5]<1..5>, MAX_AX_RUCK[0..5]<1..5>, MAX_BAHN_RUCK[0..5] oder wird einer der benutzerdefinierten Schwellenwerte erreicht beziehungsweise überschritten, generiert die Werkzeugbahnanalyse-Komponente 200 zumindest ein Zusatzsignal zur visuellen Kennzeichnung des Bereichs der Werkzeugbahn, an dem der Grenzwert beziehungsweise der benutzerdefinierte Schwellenwert erreicht oder überschritten wurde.

Beispielsweise kann ein Bereich mittels des Zusatzsignals beziehungsweise der Zusatzsignale gekennzeichnet, beispielsweise Punkt für Punkt, und die Kennzeichnung visualisiert werden ("Bereich der Punktwolke kennzeichnen" in FIG 6).

Die bei der Prüfung implementierten Bedingungen können beispielsweise wie folgt ausgestaltet werden:
AKT_AX_GESCHW<1..5> > GESCHW_LIM * MAX_AX_GESCHW[n]<1..5> | |
AKT_AX_BESCHL<1..5> > BESCHL_LIM * MAX_AX_BESCHL[n]<1..5> | |
AKT_AX_RUCK<1..5> > RUCK_LIM * MAX_AX_RUCK[n]<1..5> | |
AKT_BAHN_RUCK > RUCK_LIM * MAX_BAHN_RUCK[n]?

Mithilfe des Zusatzsignals kann nicht nur die Region beziehungsweise der Bereich der Werkzeugbahn eindeutig identifiziert werden, bei dem die Grenzwerte erreicht oder überschritten worden sind, was zu den Geschwindigkeitseinbrüchen führt, sondern sofort die Ursache der Geschwindigkeitseinbrüche erkannt werden.

Beispielsweise können die Punkte der Punktwolke, die in den vorgenannten Bereichen BG beziehungsweise in den vorgenannten Regionen mit einer anderen Farbe eingefärbt werden. Darüber hinaus kann für jeweilige Punkte auch Information in Form eines Textes "GSW" eingeblendet werden (FIG 5), der beispielsweise darauf hinweist, bei welcher Achse und/oder welchem Kanal welcher Grenzwert beziehungsweise welcher benutzerdefinierte Schwellenwert erreicht oder überschritten wurde. Beispielsweise kann der Text folgende Information beinhalten: "Der Geschwindigkeitswert für die Achse B1 liegt bei 98% des Grenzwertes".

Wird die Ursache einmal erkannt, kann die Steuerung der Werkzeugmaschine optimiert werden. Beispielsweise kann die Parametrierung der NC-Steuerung 102 und insbesondere der einzelnen G-Funktionen angepasst werden. Dadurch kann die Anzahl der Geschwindigkeitseinbrüche vermindert werden.

Die Aufgabe dieser Beschreibung besteht lediglich darin, veranschaulichende Beispiele bereitzustellen und weitere Vorteile und Besonderheiten dieser Erfindung anzugeben. Somit kann sie nicht als Einschränkung des Anwendungsgebiets der Erfindung beziehungsweise der in den Ansprüchen beanspruchten Patentrechte interpretiert werden. Beispielsweise kommen Werkzeugmaschinen nicht nur mit fünf oder sechs Achsen in Betracht. Vielmehr gilt ist die Erfindung auf die Werkzeugmaschinen und/oder Roboter mit 7, 8, ... bis zu 31 Achsen anwendbar, die z.B. dazu geeignet sind mehr als ein Werkstück gleichzeitig zu bearbeiten. Insbesondere können die im Zusammenhang mit den hier beschriebenen Verfahren offenbarte Merkmale sinnvollerweise zur Weiterbildung der hier beschriebenen Systeme eingesetzt werden und *vica versa.*

## Patentansprüche

1. System zur automatisierten Unterstützung einer Inspektion und/oder Überwachung eines mittels einer Werkzeugmaschine ausgeführten Prozesses umfassend
- einen Speicher (2) zum Speichern von maschinenausführbaren Komponenten und
- einen Prozessor (3), der operativ mit dem Speicher (2) gekoppelt ist und dazu konfiguriert ist, die maschinenausführbaren Komponenten auszuführen, wobei
die maschinenausführbaren Komponenten eine Werkzeugbahnanalyse-Komponente (20, 200) umfassen, wobei
die Werkzeugbahnanalyse-Komponente (20, 200) dazu konfiguriert ist,
- aus Prozessdaten (PD), wobei die Prozessdaten (PD) für einen Prozess repräsentativ sind, welcher von einer zumindest eine Achse zum Bewegen eines Werkzeugs (101) und eine Steuereinrichtung (102) zum Steuern der zumindest einen Achse aufweisenden Werkzeugmaschine (100) ausgeführt wird,
* Signale (Sx, Sy, Sz) zur Visualisierung einer Bahn des Werkzeugs - einer Werkzeugbahn (WB1, WB2) - zu generieren, und
* zumindest eine Größe zu ermitteln, welche eine Achsenbewegung der zumindest einen Achse charakterisiert,
- zu prüfen, ob die ermittelte Größe zumindest einen, der zumindest einen Größe zugewiesenen Grenzwert (GW) erreicht oder überschreitet,
- beim Erreichen oder Überschreiten des Grenzwerts (GW) zumindest ein Zusatzsignal (ZS) zur Kennzeichnung zumindest eines Bereichs (BG) der Werkzeugbahn (WB1, WB2), an dem der Grenzwert überschritten ist, zu generieren.

2. System nach Anspruch 1, wobei die Werkzeugbahnanalyse-Komponente (20, 200) dazu konfiguriert ist, die Signale (Sx, Sy, Sz) und das Zusatzsignal (ZS) an einer Anzeigeeinrichtung (104) zu visualisieren.

3. System nach Anspruch 1 oder 2, wobei die Prozessdaten (PD) für Position der zumindest einen Achse repräsentative Daten, insbesondere Positionsdaten der Achse, die vorzugsweise für Werkzeugposition repräsentativ sind, umfassen.

4. System nach einem der Ansprüche 1 bis 3, wobei die zumindest eine Größe Geschwindigkeit, Beschleunigung, Ruck oder Stoß ist.

5. System nach einem der Ansprüche 1 bis 4, wobei die Prozessdaten (PD) einen Bezug zu einem Teileprogramm für den Bearbeitungsprozess aufweisen, wobei die Prozessdaten (PD) insbesondere einen Bezug zu G-Funktionen des Teileprogramms und vorzugsweise zu G-Code-Zeilen Teileprogramms enthalten.

6. System nach einem der Ansprüche 1 bis 5, wobei die Werkzeugbahnanalyse-Komponente dazu konfiguriert ist, die Prozessdaten im Betrieb, i.e., während des Betriebs der Werkzeugmaschine zu erhalten.

7. System nach einem der Ansprüche 1 bis 6, wobei die Werkzeugbahnanalyse-Komponente (20, 200) dazu konfiguriert ist, das Zusatzsignal (ZS) zu generieren, wenn die zumindest eine Größe einen vorgebbaren von dem zumindest einen Grenzwert (GW) abhängigen Schwellenwert (UT) überschreitet.

8. System nach einem der Ansprüche 1 bis 7, wobei die Werkzeugmaschine (100) zwei oder mehr Achsen umfasst, wobei die Werkzeugbahnanalyse-Komponente (20, 200) dazu konfiguriert ist, die zumindest eine Größe für jede Achse zu ermitteln und das Erreichen oder die Überschreitung des zumindest einen Grenzwerts (GW) zu prüfen.

9. System nach Anspruch 8, wobei unterschiedlichen Achsen unterschiedliche Grenzwerte (GW) für die zumindest eine Größe zugewiesen sind, wobei die Werkzeugbahnanalyse-Komponente (20, 200) dazu konfiguriert ist, das Erreichen oder die Überschreitung des entsprechenden zumindest einen Grenzwerts (GW) für jede Achse zu prüfen.

10. System nach Anspruch 8 oder 9, wobei die Werkzeugbahnanalyse-Komponente (20, 200) dazu eingerichtet ist, für unterschiedliche Achsen unterschiedliche Zusatzsignale zu generieren, die vorzugsweise zur unterschiedlichen Kennzeichnung führen.

11. Steuereinrichtung mit einem System nach einem der Ansprüche 1 bis 10.

12. Werkzeugmaschine mit zumindest einer Achse zum Bewegen eines Werkzeugs (101) und einer Steuereinrichtung nach Anspruch 11.

13. Werkzeugmaschine nach Anspruch 12, ferner umfassend eine der Steuereinrichtung (102) zugeordnete Anzeigeeinrichtung (104), auf welcher die Signale (Sx, Sy, Sz) und das Zusatzsignal (ZS), vorzugsweise gleichzeitig visualisierbar sind.

14. Computergestütztes Verfahren zur automatisierten Unterstützung einer Inspektion und/oder Überwachung eines mittels einer Werkzeugmaschine ausgeführten Prozesses, wobei
- aus, insbesondere während des Betriebs einer Werkzeugmaschine (100) erhaltenen Prozessdaten, wobei die Prozessdaten (PD) für einen Prozess repräsentativ sind, welcher von einer zumindest eine Achse zum Bewegen eines Werkzeugs (101) und eine Steuereinrichtung (102) zum Steuern der zumindest einen Achse aufweisenden Werkzeugmaschine (101) ausgeführt wird,
* Signale (Sx, Sy, Sz) zur Visualisierung einer Bahn des Werkzeugs - einer Werkzeugbahn (WB1, WB2) - generiert werden, und
* zumindest eine Größe ermittelt wird, welche eine Achsenbewegung der zumindest einen Achse charakterisiert,
- geprüft wird, ob die ermittelte Größe zumindest einen, der zumindest einen Größe zugewiesenen Grenzwert (GW) erreicht oder überschreitet,
- beim Erreichen oder Überschreiten des Grenzwerts (GW) zumindest ein Zusatzsignal (ZS) zur Kennzeichnung zumindest eines Bereichs (BG) der Werkzeugbahn (WB1, WB2), an dem der Grenzwert (GW) überschritten ist, generiert wird.

15. Computerprogramm umfassend Befehle, die bei der Ausführung des Programms durch einen Computer diesen veranlassen, ein Verfahren nach Anspruch 14 auszuführen.
